# EUROPEAN PATENT APPLICATION

(11) **EP 2 207 151 A1**
(43) Date of publication of application: **14.07.2010**
(21) Application number: 09180727.1
(22) Date of filing: 24.12.2009
(51) Int. Cl.: G08B 13/16, G08B 13/24, B60R 25/10

(54) **Upgraded anti break-in system, particularly for applications inside environments, on vehicles or the like**

(30) Priority: 09.01.2009 IT MO20090003
(71) Applicant: Meta System S.p.A., 42124 Reggio Emilia (IT)
(72) Inventor: Simonazzi, Giuseppe, 42123, Reggio Emilia (IT)
(74) Representative: Brogi, Graziano

(57) **Abstract**

An upgraded anti break-in system, particularly for applications inside environments, on vehicles or the like, comprises first sensor means, always active, with low energy consumption, and suitable for detecting any break-in into an area to be monitored, second sensor means normally deactivated and suitable for checking the break-in detected by the first sensor means into the area to be monitored, and a processing unit associated with the first sensor means and with the second sensor means and provided with activation means for activating the second sensor means in case of the detection of a break-in by the first sensor means.

The second sensor means comprise an emission and receiver device for a detection signal at a delimited and predefined volume inside the area to be monitored.

## Description

The present invention relates to an upgraded anti break-in system, particularly used for applications inside environments, on vehicles or the like.

Within the anti break-in systems for homes or vehicles, the use is known of sensors of the double-technology volumetric type, generally microwave and passive infra-red, used in order to reduce the possibility of false alarms occurring.

The microwave sensors in fact, though considerably more sensitive that infra-red sensors, have the limit of not being able to operate inside a well-delimited and predefined area in the environments in which they are installed, particularly in the case in which, inside such environments, there are glass windows or partitions or other surfaces that do not reflect the emitted microwaves.

Passive infra-red sensors, on the other hand, though operating inside delimited areas, including in the presence of glass windows or partitions or similar surfaces, are sensitive to hot-air currents and the direct radiation of the sun, which results in the possibility of incorrect detection with consequent false alarms.

The combined use of both technologies therefore, generally allows verifying the presence of incorrect detection and in fact limits the possibility of false alarms.

A further technology provides for the use of ultrasonic sensors suitable for emitting an ultrasonic signal inside a so-called emission lobe and receiving any ultrasonic signals reflected by an obstacle.

Ultrasonic technology however is commonly used in the automotive industry and is generally little used to protect home interiors and, in general, open environments.

Quite apart from the adopted technology, it is in any case crucial to reduce the energy consumption of the sensors used because, as is well known, all anti break-in systems are designed to operate for a period of time even in the absence of mains power supply, e.g., by means of an independent battery.

It therefore appears evident that the greater the energy consumption of the sensors used, the less the autonomy of the anti break-in system.

For this reason, in currently known double-technology anti break-in systems, at least one low-energy consumption technology is commonly used, such as infra-red technology.

In any case, the simultaneous use of two technologies involves a far from negligible energy consumption, which makes use limited in anti break-in systems equipped with wireless and battery-driven sensor devices.

To overcome this drawback, also known are anti break-in systems that use at least a first low energy consumption and always-active sensor, such as e.g, a passive infra-red sensor, if necessary in combination with a second higher-energy consumption sensor, normally deactivated and which can only be activated in case of the detection of a possible break-in by the first sensor.

These anti break-in systems however are also susceptible of improvements.

In particular, despite the use of two different technologies, the intrinsic limits of each technology do not permit eliminating the risk of false alarms, in particular in the case in which the areas to be protected are areas delimited inside open spaces or, in any case, in the case in which there are openings such as windows of a house or windows of a vehicle.

The main aim of the present invention is to provide an upgraded anti break-in system, particularly for applications inside environments, on vehicles or the like which allows reducing to the utmost the risk of false alarms due to wrong sensor detections.

Another object of the present invention is to provide an upgraded anti break-in system, particularly for applications inside environments, on vehicles or the like, with reduced energy consumption.

Another object of the present invention is to provide an upgraded anti break-in system, particularly for applications inside environments, on vehicles or the like, which allows to achieve the mentioned upgrading in the ambit of a simple, rational, easy, effective to use and low cost solution.

The above objects are achieved by the present upgraded anti break-in system, particularly for applications inside environments, on vehicles or the like, comprising first sensor means, always active, with low energy consumption, and suitable for detecting any break-in into an area to be monitored, second sensor means normally deactivated and suitable for checking the break-in detected by said first sensor means into said area to be monitored, and at least a processing unit associated with said first sensor means and with said second sensor means and provided with activation means for activating said second sensor meals in case of the detection of a break-in by said first sensor means, characterized by the fact that said second sensor means comprise at least an emission and receiver device for a detection signal at a delimited and predefined volume inside said area to be monitored.

Other characteristics and advantages of the present invention will become more evident from the description of two preferred, but not sole, embodiments of an upgraded anti break-in system, particularly for applications inside environments, on vehicles or the like, illustrated purely as an example but not limited to the annexed drawings in which:
figure 1 is a schematic and axonometric view of a first embodiment of the anti break-in system according to the invention, fitted on a motor vehicle;
figure 2 is a side view of the motor vehicle of figure 1;
figure 3 is a general diagram that shows a possible wireless embodiment of the anti break-in system according to the invention.

With particular reference to such figures, globally by 1 has been indicated an upgraded anti break-in system, of the type used for applications inside the environments of a home or inside the compartment of a vehicle.

The system 1 comprises first sensor means 2, always active, having one or more low energy consumption sensors, suitable for detecting any break-in inside an area to be monitored.

The system 1 further comprises second sensor means 3 normally deactivated and suitable for verifying the break-in detected by the first sensor means 2 inside the area to be monitored.

A processing unit 4, of the type of a control unit or the like, is associated with the first sensor means 2 and with the second sensor means 3, and has activation means suitable for activating the second sensor means 3 in case of the detection of a break-in inside the area to be monitored by means of the first sensor means 2.

The control unit 4 is programmed to process the signals received from the first sensor means 2 and from the second sensor means 3, so as to avoid the tripping of false alarms.

It must be pointed out that, within this description, by the expression "normally deactivated" referred to the second sensor means 3, is meant that the second sensor means are only activated following a detection by the first sensor means 2 and that, once the system 1 has been deactivated or a check has been made to determine there is no break-in, they are again deactivated.

This makes it possible to considerably limit the total energy consumption of the system 1, without however doing without the effectiveness in the reduction of false alarms resulting from the simultaneous use of a double break-in detection technology.

The system 1 also comprises sound or visual type signalling means, electronically connected to the control unit 4 and suitable for signalling a break-in in case of simultaneous detection by the first sensor means 2 and the second sensor means 3.

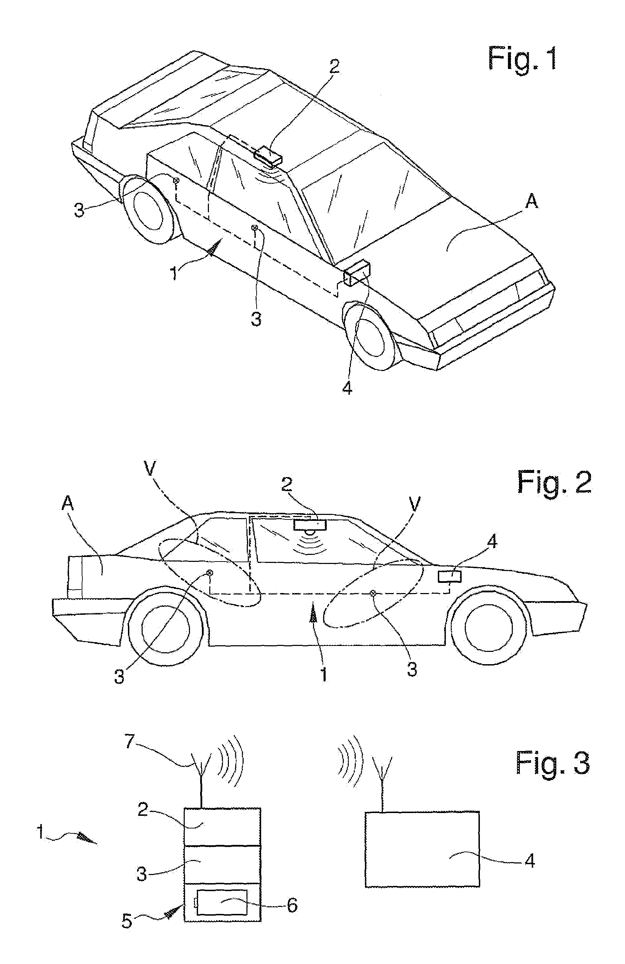

A first embodiment of the system 1, schematically shown in the figures 1 and 2, refers to an application on a motor vehicle A, in which the first sensor means 2 consists of an always active microwave sensor, with reduced power input, which in case of the detection of a break-in activates the second sensor means 3, composed of several ultrasonic volumetric sensors which confirm whether a break-in has taken place or not.

During use, in case of the detection of a possible break-in inside the compartment of the motor vehicle A by the microwave sensor 2, the ultrasonic sensors 3 are activated and, if this too confirms the break-in, a signal is sent to the control unit 4.

Because the ultrasonic sensors 3 are only activated in case of the detection of a possible break-in by the microwave sensor 2, it is obvious that the energy consumption of the entire system 1 corresponds substantially to that of the microwave sensor 2.

Usefully, the system I can comprise, besides traditional sound signalling means such as sirens or the like, also sound or visual warning means, connected electronically to the control unit 4 and suitable for signalling a presence in the vicinity of the area to be monitored in case of detection by said first sensors only.

In practice, by regulating the microwave sensor 2 with a very high sensitivity, so as to extend its action through the windows and outside the motor vehicle A, the operation of such warning means can be configured so as to signal in a discreet way, e.g., by means of an intermittent buzzer, the presence of a movement in the immediate vicinity of the motor vehicle itself, without the signalling means being necessarily triggered. Such signalling means in fact can then be subsequently triggered only in the case of detection by the ultrasonic sensor 3.

A second embodiment of the system 1, shown schematically in figure 3, refers to an application inside a house and comprises the use of one or more detection devices 5 installed inside different environments or covering different areas inside the same environment.

Each of the detection devices 5 comprises first sensor means 2, made up of an always-active infra-red sensor, with reduced power input, which in the case of the detection of a break-in activates the second sensor means 3, made up of an ultrasonic volumetric sensor which confirms or not that a break-in has taken place.

Each of the detection devices 5 can be associated with an external power supply line or, usefully, can be equipped with an independent power battery 6 and radio-wave transmission/receiver means 7 for communicating to/from the control unit 4.

During use, in the case of the detection of a possible break-in by the infra-red sensor 2, the ultrasonic sensor 3 is activated and, if this too confines the break-in, a radio signal is sent to the control unit 4 by means of the radio-wave transmission/receiver means 7.

Because the ultrasonic sensor 3 is only activated in the case of detection of a possible break-in by the infra-red sensor 2, it is obvious that the energy consumption of the entire system 1 substantially corresponds to that of the infra-red sensor 2, something that allows supply for a considerably long time by means of the battery 6 only.

Advantageously, in both embodiments shown in the figures 1, 2 and 3, the second sensor means 3 are made up of at least an emission and receiver device for a detection signal inside the area to be monitored and at a delimited and predefined volume V.

In particular, by the term "delimited and predefined volume", is meant a well-defined volume V inside the area to be monitored, determined in accordance with the more important spaces to be protected such as, e.g., the space near the steering wheel or seat of a motor vehicle, or according to the presence of open areas or any openings consisting, e.g., of the windows of a motor vehicle.

This allows further reducing the possibility of false alarms due to wrong detections by the second sensor means 3.

In particular, the emission and receiver devices of the second sensor means 3 can be made up of one or more ultrasonic lobe sensors with asymmetric or controlled emission.

In particular, with particular reference to the first embodiment of the system 1 shown in the figure 3, the volume V is defined by the asymmetric lobes of the ultrasonic sensors 3 installed on the rear and front doors.

Such asymmetric lobes are suitably shaped and positioned so as to detect any break-in only in areas of particular importance inside the motor vehicle compartment, such as the area near the steering wheel or the seat on the driver's side.

The use cannot however be ruled out of different types of sensors, including with low energy consumption, for the realisation of the second sensor means 3.

It has in practice been found how the invention described achieves the proposed objects.

In particular, the fact is underlined that the anti break-in system according to the invention permits reducing to the utmost the risk of false alarms due to wrong sensor detections.

The fact is also underscored that, by having the first sensor means always active by means of an infra-red or microwave technology and the second sensor means normally deactivated by means of an ultrasonic technology, a very sensitive anti break-in system is obtained, virtually immune from false alarms and with an energy consumption comparable to that envisaged in case of use of a single low-consumption technology.

## Claims

1. Upgraded anti break-in system, particularly for applications inside environments, on vehicles or the like, comprising first sensor means (2), always active, with low energy consumption, and suitable for detecting any break-in into an area to be monitored, second sensor means (3) normally deactivated and suitable for checking the break-in detected by said first sensor means (2) into said area to be monitored, and at least a processing unit (4) associated with said first sensor means (2) and with said second sensor means (3) and provided with activation means for activating said second sensor means (3) in case of the detection of a break-in by said first sensor means (2), **characterized by** the fact that said second sensor means (3) comprise at least an emission and receiver device for a detection signal at a delimited and predefined volume inside said area to be monitored.

2. System according to claim 1, **characterized by** the fact that said emission and receiver device comprises at least an ultrasonic sensor with asymmetric emission lobe.

3. System according to one or more of the previous claims, **characterized by** the fact that said emission and receiver device comprises at least an ultrasonic sensor with controlled emission lobe.

4. System according to one or more of the previous claims, **characterized by** the fact that said first sensor means (2) comprise at least an infra-red sensor or the like.

5. System according to one or more of the previous claims, **characterized by** the fact that said first sensor means (2) comprise at least a microwave sensor or the like.

6. System according to one or more of the previous claims, **characterized by** the fact that said second sensor means (3) comprise at least a low-energy consumption sensor.

7. System according to one or more of the previous claims, **characterized by** the fact that it is electrically associable with an outside power line.

8. System according to one or more of the previous claims, **characterized by** the fact that it comprises at least an independent power battery (6).

9. System according to one or more of the previous claims, **characterized by** the fact that it comprises radio-wave transmission/receiver means (7) between said first and second sensor means (3) and said processing unit (4).

10. System according to one or more of the previous claims, **characterized by** the fact that it comprises signalling means associated with said processing unit (4) and suitable for signalling a break-in in case of simultaneous detection by said first and second sensor means (2, 3).

11. System according to one or more of the previous claims, **characterized by** the fact that it comprises warning means associated with said processing unit (4) and suitable for signalling a presence in the vicinity of the area to be monitored in case of detection only by said first sensor means (2).

12. System according to one or more of the previous claims, **characterized by** the fact that at least one between said signalling means and said warning means is of the sound or visual type.
